# EUROPÄISCHE PATENTSCHRIFT

(11) **EP 0 393 419 B1**
(45) Veröffentlichungstag und Bekanntmachung des Hinweises auf die Patenterteilung: **09.06.1993**
(21) Anmeldenummer: 90106440.2
(22) Anmeldetag: 04.04.1990
(51) Int. Cl.: B62D 7/06, B62D 7/14

(54) **Lenkeinrichtung für Personenkraftwagen**
Steering apparatus for vehicle
Direction pour véhicule automobile

(30) Priorität: 19.04.1989 DE 3912772
(43) Veröffentlichungstag der Anmeldung: 24.10.1990
(73) Patentinhaber: DAIMLER-BENZ AKTIENGESELLSCHAFT, 70327 Stuttgart (DE)
(72) Erfinder: Kleinschmit, Einhard, D-7300 Esslingen (DE); Tattermusch, Peter, D-7300 Esslingen (DE); König, Werner, D-7000 Stuttgart 61 (DE)

(56) Entgegenhaltungen:
- EP-A- 0 221 547
- DE-A- 3 438 084
- DE-A- 3 522 700
- GB-A- 1 594 630

## Beschreibung

Die Erfindung betrifft eine Lenkeinrichtung für Personenkraftwagen, mit den Merkmalen des Oberbegriffs von Patentanspruch 1.

Eine derartige Lenkeinrichtung ist aus UK-PS 15 94 630 bekannt. An den Enden der im Querschnitt umgekehrt U-förmigen und unterhalb des Antriebsmotors am Fahrzeugaufbau befestigten Quertraverse ist jeweils ein Radführungslenker für die angetriebenen Vorderräder angelenkt. Die Quertraverse erstreckt sich dabei parallel zu einem Triebstrang, der durch ein Achsgetriebe und sich von diesem für den Antrieb der Vorderräder wegerstreckenden Achswellen gebildet ist.

Das U-Profil der Quertraverse ist an seiner untenliegenden, offenen Profilseite durch eine ebene Abdeckplatte verschlossen, die in der Längsmitte der Quertraverse nach unten muldenartig ausgeformt ist. Der dadurch gebildete, nach unten gerichtete Höcker bildet einen Aufsitzschutz und dient zum Ansetzen eines Wagenhebers.

Innerhalb des U-Profils der Quertraverse ist eine in Fahrzeugquerrichtung verstellbare, über Spurstangen mit den Vorderrädern verbundene Lenkstange samt Lenkgetriebe geschützt untergebracht, wobei es der zum Triebstrang parallele Verlauf der Quertraverse ermöglicht, die Spurstange innerhalb der Traversenendstücke jeweils an ein Lenkstangenende anzubinden.

Aufgabe der Erfindung ist es, aufzuzeigen, wie sich bei einer Lenkeinrichtung in einer Ausbildung gemäß dem Oberbegriff des Patentanspruches 1 eine durch die Quertraverse geschützte Anordnung der Lenkstange und eine vorteilhafte Anbindung derselben an die Spurstangen verwirklichen läßt, wenn die Quertraverse von einem Achsgetriebe eines Triebstranges, in der Projektion senkrecht auf eine gemeinsame Ebene betrachtet, gekreuzt wird. Diese Aufgabe wird erfindungsgemäß durch die kennzeichnenden Merkmale des Patentanspruches 1 gelöst.

Bei der erfindungsgemäßen Konstruktion bildet somit die Quertraverse einen Teil eines oberhalb des Achsgetriebes vorgesehenen, dasselbe elastisch abstützenden Achsträgers. Die von der Quertraverse aufgenommene Lenkstange überbrückt dabei, vorzugsweise bogenförmig, das Achsgetriebe.

Hierbei taucht die Lenkstange mit ihren Stangenenden im Bereich der Anschlußstellen der Quertraverse an den Seitenteilen des Achsträgers aus dem U-Profil der Quertraverse nach unten aus, so daß neben der bei völliger Raumausnutzung geschützten Lenkstangenanordnung auch eine vorteilhaft zu bewerkstelligende Anlenkung der Spurstangen an den Lenkstangenenden möglich ist.

Ein besonderer Vorteil der Erfindung besteht hierbei darin, daß, aufgrund der erfindungsgemäßen Anordnung von Quertraverse und Lenkstange, die Lenkeinrichtung im Achsbereich die Bodenfreiheit des Fahrzeugs nicht beeinträchtigt. Schließlich ermöglicht es diese Anordnung, für die lenkstangenseitigen Anlenkpunkte der Spurstangen, bezogen auf eine vorgegebene Achskinematik, die jeweils günstigste Position in Hochrichtung wählen zu können.

Vorteilhafte Ausgestaltungen der Erfindung sind Gegenstand von Unteransprüchen.

In der Zeichnung ist, stark schematisiert, ein Ausführungsbeispiel einer erfindungsgemäßen Lenkeinrichtung für eine angetriebene Hinterachse dargestellt. Es zeigen:
- Figur 1: eine Draufsicht eines mit der Lenkeinrichtung ausgestatteten Hinterachsfahrschemels.
- Figur 2: einen Schnitt entlang der Linie II-II der Figur 1 und
- Figur 3: einen Schnitt entlang der Linie III-III der Figur 2, in vergrößertem Maßstab.

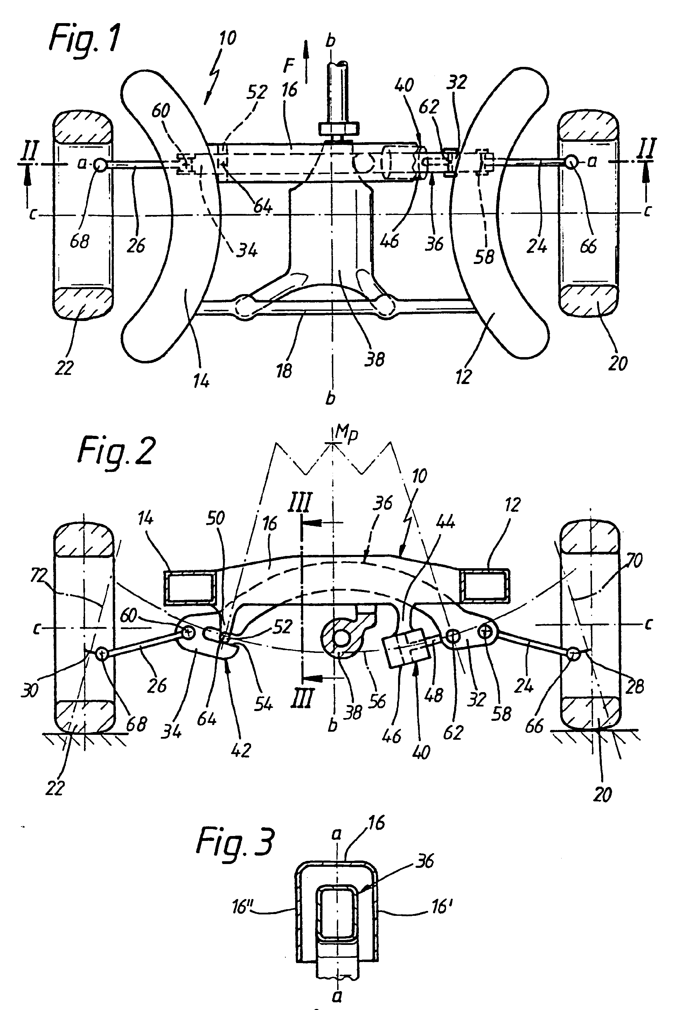

In den Figuren 1 und 2 bezeichnet 10 einen Hinterachs-Fahrschemel, der zwei beispielsweise bogenförmig ausgebildete Seitenteile 12 und 14 aufweist, deren Krümmungsmittelpunkt fahrzeugaußenseitig liegt. Diese sind beispielsweise durch zwei im Abstand voneinander angeordnete Quertraversen 16 und 18 miteinander verbunden. Die Seitenteile 12 und 14 sind an ihren Endbereichen mit einem Aufbau eines Personenkraftwagens elastisch nachgiebig verbindbar.

Mit 20 und 22 sind Räder bezeichnet, die, voneinander unabhängig, über Radführungselemente am Fahrschemel 10 geführt sind, von denen je Rad 20 bzw. 22, im Interesse einer übersichtlichen Darstellung, jeweils nur eine Spurstange 24 bzw. 26 gezeigt ist.

Mit ihrem äußeren Stangenende sind die Spurstangen 24 und 26 jeweils an einem Radträger 28 bzw. 30 und mit ihrem inneren Stangenende an jeweils einem Stangenende 32 bzw. 34 einer sich in Fahrzeugquerrichtung erstreckenden Lenkstange 36 angelenkt.

Wie Figur 3 zeigt, weist die Quertraverse 16 ein sich nach unten öffnendes U-Profil auf, wobei die Lenkstange 36 in die Quertraverse 16 integriert und in Fahrzeugquerrichtung geführt ist und somit zu deren Unterbringung im Bereich des Hinterachs-Fahrschemels 10 kein zusätzlicher Einbauraum bereitzustellen ist.

Die Quertraverse 16 bildet somit für die Lenkstange 36 ein Gehäuse, und könnte auch Teil einer anderen Fahrzeugkomponente, beispielsweise des Karosseriebodens, sein. In diesem Falle könnten die Lenkstangenenden 32 und 34 aus den Enden der Quertraverse 16 herausgeführt sein.

Aufgrund dessen, daß die Quertraverse 16 zwischen die Seitenteile 12 und 14 eingeschweißt ist, taucht die Lenkstange 36 mit ihren Stangenenden 32 und 34 im Bereich der Seitenteile 12 und 14 nach unten aus der Quertraverse 16 aus und ist hierzu beispielsweise bogenförmig gestaltet. Die Stangenenden 32 und 34 befinden sich dabei teilweise unterhalb der Seitenteile 12 und 14. Diese Lenkstangengestaltung bietet überdies die Möglichkeit, die Lenkstange 36 sowohl für vorderachs- als auch für hinterachsgetriebene Fahrzeuge gleich vorteilhaft einsetzen zu können, in dem sie, wie gezeigt, im Falle eines an den Quertraversen 16 und 18 in bekannter Weise unterseitig elastisch aufgehängten Achsgetriebes 38 dasselbe überbrückt.

Die Lenkstange 36 ist in deren vertikalen Verstellebene a-a (Figur 1) mittels zweier Führungsvorrichtungen 40 und 42 in Fahrzeugquerrichtung geführt.

Die Führungsvorrichtung 40 weist beispielsweise einen doppelt beaufschlagbaren, an einem unteren Ansatz 44 der Quertraverse 16 gehaltenen, ein Lenkstellglied bildenden Arbeitszylinder 46 auf, dessen Kolbenstange 48 am Stangenende 32 der Lenkstange 36 angelenkt ist.

Die Führungsvorrichtung 42 weist einen, an einem weiteren unteren Ansatz 50 der Quertraverse 16 gehaltenen, beispielsweise zylindrischen Führungskörper 52 auf, dessen Achse sich parallel zur Fahrzeugmittenlängsebene b-b erstreckt. Dieser Führungskörper 52 ist mit einer im Lenkstangenende 34 vorgesehenen Führungsnut 54 in Eingriff, so daß dort die Lenkstange 36 sowohl in Längsrichtung verschoben als auch gekippt werden kann.
Führungskörper 52 und Führungsnut 54 könnnen auch jeweils am anderen Teil einander entsprechend zugeordnet sein.

Wie Figur 2 zeigt, sind die beiden Führungsvorrichtungen 40 und 42 derart ausgelegt, daß die Lenkstange 36 in jeder Verstellrichtung jeweils schräg nach oben, außen geführt ist. Die Verstellrichtungen jedes Lenkstangenendes 32 und 34 verlaufen dabei tangential zu einer durch einen oberhalb der Radachse c-c liegenden Momentalpol Mp definierten Bahnkurve 56.

Wie aus Figur 1 ersichtlich ist, liegt der innere, lenkstangenseitige Anlenkpunkt 58 bzw. 60 der Spurstangen 24 und 26 in der Verstell- bzw. Längsmittenebene a-a der Lenkstange 36; ebenso der lenkstangenseitige Angriffspunkt 62 der Kolbenstange 48 sowie der entsprechende Abstützpunkt 64 der Führungsvorrichtung 42. Dadurch ergibt sich der Vorteil, daß bei Stößen in vertikaler Richtung auf die die Lenkstange 36 führenden Elemente beider Führungsvorrichtungen 40 und 42 keine Momente entstehen können. Ebenso ist dies bei Lenkbewegungen der Lenkstange 36 nicht der Fall.

Bei Lenkbewegungen der Lenkstange 36 wird durch die beiden Führungsvorrichtungen 40 und 42 erreicht, daß die lenkstangenseitigen Anlenkpunkte 58 und 60 der Spurstangen 24 und 26 in ihrer Höhenlage parallel zur Bahnkurve 56 zueinander entgegengerichtet und jeweils gleichgerichtet zum entsprechenden Anlenkpunkt 66 bzw. 68 zwischen Spurstange 24 bzw. 26 und Radträger 28 bzw. 30 verstellt werden.

Dabei ist der Verlauf der die Bewegung der Lenkstange 36 bestimmenden Bahnkurve 56, bezogen auf eine Neigung einer Lenkachse 70 bzw. 72 der Räder 20 und 22, derart festgelegt, daß sich bei Lenkeinschlägen und durchfedernden Rädern 20 und 22 nur minimale Vorspuränderungen einstellen können bzw. die für die Konstruktionslage festgelegte Vorspur keine nennenswerte Vergrößerung erfahren wird.

Die erläuterte Anordnung der Lenkstange 36 innerhalb eines einen umgekehrt U-förmigen Querschnitt aufweisenden Trägers bzw. der Quertraverse 16 ermöglicht bei völliger Raumausnutzung deren zuverlässigen Schutz, Betriebssicherheit der Hinterachs-Lenkeinrichtung und Bodenfreiheit. Dabei können die Bauteile für den Achsträger bzw. Fahrschemel 10, ob dieser mit oder ohne Hinterachs-Lenkeinrichtung ausgelegt werden soll, optimal steif ausgebildet werden.

Ist eine Hinterachs-Lenkeinrichtung vorzusehen, ändern sich dadurch die Bauteile für den Fahrschemel 10 gestaltungstechnisch überhaupt nicht. Es sind dann lediglich die Ansätze 44 und 50 bildende Lagerböcke für die Lenkstangenführung an die Trägerschenkel 16′und 16˝ anzuschweißen und die Lenkstange 36 in den Träger 16 einzusetzen.

Die Anordnung der Lenkstange 36 ermöglicht deren Ausbildung mit einer hohen Steifigkeit, der hinsichtlich ihres Einflusses auf die gesamte Achskinematik besondere Bedeutung zukommt.

## Patentansprüche

1. Lenkeinrichtung für Personenkraftwagen, mit einer aufbaufesten, sich in Fahrzeugquerrichtung erstreckenden, zu einem Achsgetriebe (38) benachbarten und ein sich nach unten öffnendes U-Profil aufweisenden Quertraverse (16) und mit einer innerhalb der Quertraverse (16) angeordneten Lenkstange (36, an deren Enden jeweils eine mit einem Radträger (28 bzw. 30) gelenkig verbundene Spurstange (24 bzw. 26) angelenkt ist und die mittels eines an der Quertraverse (16) angeordneten, ansteuerbaren Stellgliedes (Arbeitszylinder 46) in Fahrzeugquerrichtung verstellbar ist,
**dadurch gekennzeichnet**,
daß die Quertraverse (16) zwei in Fahrzeuglängsrichtung verlaufende Seitenteile (12 und 14) eines gegenüber dem Fahrzeugaufbau elastisch abgestützten Achsträgers (10) für eine angetriebene Fahrzeugachse miteinander verbindet, daß das Achsgetriebe (38) vom Achsträger (10) aufgenommen ist und daß die Lenkstange (36) das Achsgetriebe (38) überbrückt und mit ihren Stangenenden (32 und 34) im Bereich der Seitenteile (12 und 14) des Achsträgers (10) aus der Quertraverse (16) austaucht.

2. Lenkeinrichtung nach Anspruch 1,
**dadurch gekennzeichnet,**
daß die Lenkstange (36) in der Quertraverse (16) derart geführt ist, daß bei Lenkbewegungen die lenkstangenseitigen Anlenkpunkte (58 und 60) der Spurstangen (24 und 26) in ihrer Höhenlage zueinander entgegengerichtet und jeweils gleichgerichtet zum entsprechenden Anlenkpunkt (66 bzw. 68) zwischen Spurstange (24 bzw. 26) und Radträger (28 bzw. 30) verstellt werden.

3. Lenkeinrichtung nach Anspruch 1 oder 2,
**dadurch gekennzeichnet,**
daß die Lenkstange (36) an ihren Enden durch einen traversenfesten Führungskörper (52) bzw. durch das Stellglied (40), welches linear verstellbar ist, jeweils schräg nach oben, außen geführt ist, wobei die Verstellrichtungen zu einer durch einen oberhalb der Radachse c-c liegenden Momentanpol Mp bestimmten Bahnkurve (56) tangential verlaufen.

4. Lenkeinrichtung nach einem der vorhergehenden Ansprüche,
**dadurch gekennzeichnet,**
daß die lenkstangenseitigen Anlenkpunkte (58 und 60) der Spurstangen (24 und 26) an der Lenkstange (36) in deren Verstell- bzw. Längsmittenebene a-a liegen.

5. Lenkeinrichtung nach einem der vorhergehenden Ansprüche,
**dadurch gekennzeichnet,**
daß das Stellglied (40) leitungsgebunden und an der Quertraverse (16) abgestützt ist.

6. Lenkeinrichtung nach einem der vorhergehenden Ansprüche,
**dadurch gekennzeichnet,**
daß die Lenkstange (36) das Achsgetriebe (38) bogenförmig übergreift.

## Claims

1. A steering means for private motor cars with, rigid with the vehicle structure and extending in the transverse direction of the vehicle, a transverse member (16) adjacent an axle gearbox (38) and having a downwardly opening U-shaped profile and with, disposed inside the transverse member (16), a drag link (36), at each of the ends of which there is articulated a track rod (24, 26) articulatingly connected to a wheel carrier (28, 30), and which can be adjusted in the transverse direction of the vehicle by an actuable positioning member (working cylinder 46) disposed on the transverse member (16), characterised in that for a driven vehicle axle, the cross-member (16) connects to each other two side members (12 and 14) of an axle beam (10) which is resiliently supported in respect of the vehicle body, the said side member (12 and 14) extending in the longitudinal direction of the vehicle, and in that the axle gearbox (38) is accommodated by the axle beam (10) and in that the drag link (36) bridges the axle gearbox (38), its link ends (32 and 34) emerging from the cross-member (16) in the region of the side members (12 and 14) of the axle beam (10).

2. A steering means according to claim 1, characterised in that the drag link (36) is so guided in the cross-member (16) that during steering movements the points (58 and 60) at which the track rods (24 and 26) are articulated on the drag link are orientated in opposite directions in their heights and are in each case displaced in the same direction in relation to the corresponding point of articulation (66 and 68) between track rod (24, 26) and wheel carrier (28, 30).

3. A steering means according to claim 1 or 2, characterised in that at its ends, the drag link (36) is guided obliquely upwardly and outwardly by a guide member (52) rigid with the cross-member or by the positioning member (40) which is adapted for linear displacement, the directions of displacement extending tangentially to a curved path (56) determined by an instantaneous pole Mp situated above the wheel axis c-c.

4. A steering means according to one of the preceding claims, characterised in that those points of articulation (58 and 60) of the track rods (24 and 26) which are at the drag link end are on the drag link (36) in its displacement or longitudinal central plane a-a.

5. A steering means according to one of the preceding claims, characterised in that the positioning member (40) is connected to and supported on the cross-member (16).

6. A steering means according to one of the preceding claims, characterised in that the drag link (36) engages arcuately over the axle gearbox (38).

## Revendications

1. Dispositif de direction pour véhicules automobiles privés, comprenant une traverse (16) solidaire de la caisse, s'étendant dans la direction transversale du véhicule, voisine d'un pont (38) et présentant un profil en U qui s'ouvre vers le bas, et une barre de direction (36) disposée à l'intérieur de la traverse (16), à chacune des extrémités de laquelle est articulé un levier de direction (24 ou 26) relié à une fusée (28 ou 30) par une liaison articulée, et qui peut être manoeuvré dans la direction transversale du véhicule au moyen d'un actionneur commandé (vérin 46) porté par la traverse (16),
caractérisé
en ce que la traverse (16) relie l'un à l'autre deux éléments latéraux (12 et 14), orientés dans la direction longitudinale du véhicule qui appartiennent à un support d'essieu (10) suspendu élastiquement par rapport à la caisse du véhicule, et qui supporte un essieu moteur du véhicule, en ce que le pont (38) est supporté par le support d'essieu (10), et la barre de direction (36) enjambe le pont (38) et émerge de la traverse (16) par ses extrémités (32 et 34) dans la région des éléments latéraux (12 et 14) du support d'essieu (10).

2. Dispositif de direction selon la revendication 1,
caractérisé
en ce que la barre de direction (36) coulisse dans la traverse (16) de telle manière que, en présence des mouvements de direction, les points d'articulation (58 et 60) des leviers de direction (24 et 26) sur la barre de direction se déplacent l'un en sens inverse de l'autre dans le sens de la hauteur mais tous deux dans le même sens, considéré par rapport au point d'articulation correspondant (66 ou 68) entre le levier de direction (24 ou 26) et la fusée (28 ou 30).

3. Dispositif de direction selon la revendication 1 ou 2,
caractérisé
en ce qu'à ses extrémités, la barre de direction (36) est guidée, en mouvement oblique vers le haut et vers l'extérieur respectivement, par un corps de guidage (52) solidaire de la traverse et par l'actionneur (40), lequel est à mouvement linéaire, les directions des mouvements s'étendant tangentiellement à une trajectoire courbe (56) définie par un centre instantané Mp qui se trouve au-dessus de l'axe c-c des roues.

4. Dispositif de direction selon une des revendications précédentes,
caractérisé
en ce que les points d'articulation (58 et 60) des leviers de direction (24 et 26) sur la barre de direction (36) se trouvent dans le plan médian a-a du mouvement de cette barre, ou dans le plan médian longitudinal de cette barre.

5. Dispositif de direction selon une des revendications précédentes,
caractérisé
en ce que l'actionneur (40) est lié à la direction et prend appui sur la traverse (16).

6. Dispositif de direction selon une des revendications précédentes,
caractérisé
en ce que la barre de direction (36) forme un arc qui enjambe le pont (38).
